## Europäisches Patentamt
## European Patent Office
## Office européen des brevets

(19)

(11) Publication number: **0 210 869**
**A1**

(12)

# EUROPEAN PATENT APPLICATION

(21) Application number: **86305908.5**

(22) Date of filing: **31.07.86**

(51) Int. Cl.⁴: **G 01 N 21/85**

(30) Priority: **01.08.85 GB 8519387**

(43) Date of publication of application:
**04.02.87 Bulletin 87/6**

(84) Designated Contracting States:
**DE FR GB IT NL SE**

(71) Applicant: **The British Petroleum Company p.l.c.**
**Britannic House Moor Lane**
**London EC2Y 9BU(GB)**

(72) Inventor: **Baker, Barry**
**The British Petroleum Co., p.l.c., Chertsey Road**
**Sunbury-on-Thames Middlesex, TW16 7LN(GB)**

(72) Inventor: **Hilliard, Lorelii Alison**
**The British Petroleum Co., p.l.c., Chertsey Road**
**Sunbury-on-Thames Middlesex, TW16 7LN(GB)**

(74) Representative: **Crack, Richard David et al,**
**BP INTERNATIONAL LIMITED Patents Division Chertsey**
**Road**
**Sunbury-on-Thames Middlesex TW16 7LN(GB)**

(54) **Optical probe.**

(57) An optical probe for measuring absorption and transmission of light through a fluid comprises two fibre optic filaments (4, 5) which are adjacent for at least part of their length and which terminate at one end in a sample portion (3) of the probe. The ends of the fibre optic filaments in the sample portion (3) of the probe are separated by a gap capable of receiving fluid. The fibre optic filaments are single optical fibres and the ends (8, 9) of the optical fibres in the sample portion of the probe are bevelled and have light reflecting end surfaces such that light transmitted along one optical fibre is reflected by the light reflecting end surface across the gap and then along the other optical fibre. The end surfaces (8, 9) of the optical fibres may be at an angle of 45° relative to the longitudinal axis of the fibres.

FIG.2

EP 0 210 869 A1

# OPTICAL PROBE

The present invention relates to an optical probe suitable for measuring absorption and transmission of light through a fluid.

Probes which utilise fibre optics to make photometric measurements on remote samples are known. For example, a commercially available probe comprises a two channel fibre optics bundle which is capable of transmitting light through a silica window, across the sample to a second silica window behind which is mounted a mirror which reflects the light back across the sample to the fibre optics bundle. The light must therefore pass twice through each of the windows and the sample. This increases light loss and reduces the sensitivity of the probe.

An alternative design of probe, which is also commercially available, comprises two fibre optics bundles the ends of which are bent at right angles to the longitudinal axis of the probe such that the end faces of the fibre optics bundles are adjacent but separated by a gap into which the fluid sample can be introduced. The size of the probe is relatively large because of the bends in the fibre optics bundles. Also the bends in the bundles increase the light losses.

Both of the above mentioned probes use fibre optics bundles which are relatively expensive and are not easily cut to length or fitted into connectors except with specialised knowledge and equipment.

The applicants have now invented an optical probe which uses single optical fibres and does not require silica windows or sharp

1

bends in the fibres. The single optical fibres require less specialised handling and enable relatively small probes to be produced e.g. 6.5 mm diameter or less.

Thus, according to the present invention an optical probe for measuring absorption and transmission of light through a fluid comprising two fibre optic filaments which are adjacent for at least part of their length and terminate at one end in a sample portion of the probe, the ends of the fibre optic filaments in the sample portion of the probe being separated by a gap capable of receiving the fluid is characterised in that the fibre optic filaments are single optical fibres and in that the ends of the optical fibres in the sample portion of the probe are bevelled and have a light reflecting end surface such that light transmitted along one optical fibre is reflected by the light reflecting end surfaces across the gap and then along the other optical fibre.

Preferably, the end surfaces of the fibres are at an angle of 45° relative to the longitudinal axis of the fibres.

Preferably the end surfaces of the fibres are made light reflecting by being coated with a suitable light reflecting material.

Preferably, the fibres are positioned such that the gap between the ends of the optical fibres in the sample portion of the probe can be changed.

Preferably the end of each fibre opposite the light reflecting surface is provided with a flat section eg by grinding and polishing the fibre.

Preferably, at least the ends of the fibres in the sample portion are substantially parallel to one another.

Preferably the ends of the optical fibres which will be exposed to the fluid are coated with a protective non-corrosive material.

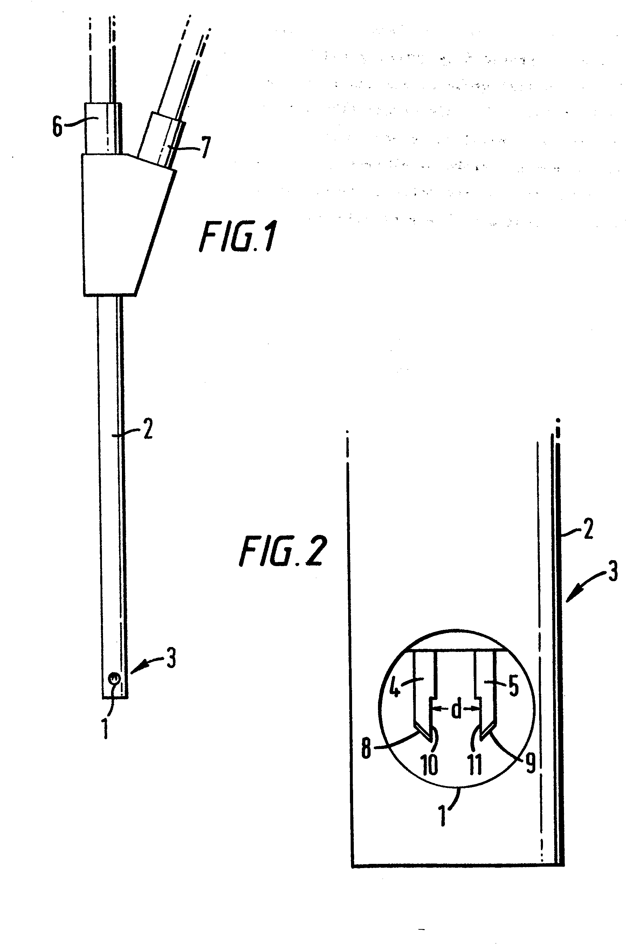

The invention is illustrated with reference to the accompanying drawings in which Figure 1 is a schematic drawing showing an embodiment of an optical probe according to the present invention and Figure 2 is a vertical section showing, on an enlarged scale, the sample portion of the probe illustrated in Figure 1.

The probe comprises a tube 2 having a sample portion 3 and two optical fibres 4 and 5 which are positioned along the inside of the tube 2. The optical fibres 4 and 5 terminate at one end in the sample portion 3 of the probe. The other ends of the fibres leave the probe via sleeves 6 and 7.

Although any optical fibre could be used in the probe according to the invention, the choice of the type of optical fibre will depend on the wavelength of light to be used. Generally, a glass fibre would be selected for wavelengths in the range 380 to 1300 nanometers. Fused silica fibres may be used over a wider wavelength range, but because of their relatively high cost, they are generally selected only for wavelengths for which glass fibres are not not suitable, i.e. in the ultraviolet range. Typically the optical fibres have a circular cross-section with a core diameter of from 5 to 400 μm and a total diameter including cladding and protective coating of from 125 to 500 μm.

The ends of the fibres 4 and 5 in the sample portion 3 are bevelled and have a light reflecting end surface 8,9. Preferably, the end surfaces 8,9 of the fibres are at an angle of 45° relative to the longitudinal axis of the fibres. The end surfaces 8,9 can be made light reflecting by coating them with a suitable light reflecting material such as for example aluminium for white light or gold for infra-red light. The end of each fibre opposite the light reflecting end surface 8,9 is provided with a flat section 10,11 by grinding and polishing the fibre.

The optical fibres 4 and 5 are positioned in the tube 2 such that the ends of the fibres in the sample portion 3 of the probe are separated by a gap d. Typically, the gap d may be from 0.5 to 2.5 mm. The ends of the fibres in the sample portion are substantially parallel to one another.

The optical fibres 4 and 5 may be sealed in position within the tube 2. The seals may, for example, be made from epoxy resins polytetrafluoroethylene, glass or cold setting ceramics. Alternatively, the fibres are positioned within the tube in such a way that the gap d between the ends of the fibres can be changed.

The ends of the optical fibres which will be exposed to the fluid are coated with a protective, non-corrosive material e.g. gold.

The tube 2 may be open ended and/or have one or more holes 1 in the sample portion 3 to allow the fluid to enter the gap d between the ends of the optical fibres. The tube 2 is preferably made from a material which is relatively chemically inert such as, for example, stainless steel, glass, fused silica or polytetrafluoroethylene.

The optical fibres 4,5 are connectable to a light source and a light detector either directly or via further lengths of optical fibres, fibre optic bundles or liquid light guides. Any suitable light source and detector may be used and the probe is suitable for use with known fibre optics light source - detection instruments. The probe may, for example, be connected to a spectrophotometer.

In use, the probe is at least partially immersed in the fluid to be tested such that the fluid enters the gap d between the ends of the fibres in the sample portion 3 of the probe. Light from a light source (not shown) is transmitted along one of the optical fibres 4, is reflected by the bevelled, light reflecting end surface 8 across the gap d and is then reflected by the bevelled light reflecting end surface 9 along optical fibre 9 to a light detector (not shown).

Claims:

1. An optical probe for measuring absorption and transmission of light through a fluid comprising two fibre optic filaments which are adjacent for at least part of their length and terminate at one end in a sample portion of the probe, the ends of the fibre optic filaments in the sample portion of the probe being separated by a gap capable of receiving the fluid is characterised in that the fibre optic filaments are single optical fibres and in that the ends of the optical fibres in the sample portion of the probe are bevelled and have a light reflecting end surface such that light transmitted along one optical fibre is reflected by the light reflecting end surfaces across the gap and then along the other optical fibre.

2. An optical probe as claimed in claim 1 in which the end surfaces of the optical fibres are at an angle of 45° relative to the longitudinal axis of the fibres.

3. An optical probe as claimed in either claim 1 or claim 2 in which the end surfaces of the fibres are made light reflecting by being coated with a suitable light reflecting material.

4. An optical probe as claimed in any one of claims 1 to 3 in which the fibres are positioned such that the gap between the ends of the optical fibres in the sample portion of the probe can be changed.

5. An optical probe as claimed in any one of claims 1 to 4 in which a flat section is provided at the end of each fibre opposite the light reflecting end surface.

6. An optical probe as claimed in claim 5 in which the flat section is provided by grinding and polishing the fibre.

7. An optical probe as claimed in any one of claims 1 to 6 in which at least the ends of the fibres in the sample portion are substantially parallel to one another.

8. An optical probe as claimed in any one of claims 1 to 7 in which the ends of the optical fibres which will be exposed to the fluid are coated with a protective non-corrosive material.

1/1

0210869

FIG.1

FIG.2

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 028 013  (MAHOG) <br> * Claims; figures * | 1,2,5 | G 01 N  21/85 |
| Y | DE-A-2 534 763  (LKB-PRODUKTER) <br> * Pages 5-8; figure 1 * | 1-3 | |
| Y | WO-A-8 404 966  (GREINER ELECTRONICS) <br> * Abstract; claims; figures * | 1-3 | |
| A | EP-A-0 047 094  (ORIEL SCIENTIFIC) <br> * Abstract; claims * | 1 | |
| A | US-A-3 867 033  (S.H. HASINGER) <br> * Whole document * | 1 | |
| A | FR-A-2 467 397  (C. MORAND et al.) <br> * Whole document * | 1 | TECHNICAL FIELDS SEARCHED (Int. Cl.4) <br><br> G 01 N  21/85 |
| A | US-A-3 141 094  (A. STRICKLER) <br> * Whole document * | 1 | |
| A | US-A-3 692 410  (G. JURANY) <br> * Whole document * | 1 | |

The present search report has been drawn up for all claims

| Place of search | Date of completion of the search | Examiner |
|---|---|---|
| THE HAGUE | 05-11-1986 | CALLEWAERT-HAEZEBROU |